# EUROPEAN PATENT APPLICATION

(11) **EP 4 306 824 A1**
(43) Date of publication of application: **17.01.2024**
(21) Application number: 22306052.6
(22) Date of filing: 13.07.2022
(51) Int. Cl.: F16J 15/10, F16J 15/12, F16L 23/18, F16L 23/22, H01H 33/56, H02G 5/06

(54) **IMPROVED COMPRESSION SEALING GASKET AND SEALING SYSTEM**

(71) Applicant: General Electric Technology GmbH, 5400 Baden (CH)
(72) Inventor: TREIER, Lukas, 5036 Oberentfelden (CH); LÜSCHER, Robert, 5036 Oberentfelden (CH); PERRET, Maxime, 5036 Oberentfelden (CH); KIEFFEL, Yannick, 69100 Villeurbanne (FR); BERTELOOT, Thomas, 69100 Villeurbanne (FR)
(74) Representative: Brevalex

(57) **Abstract**

The invention concerns a compression sealing gasket (14) comprising an annular main body (18) compression sealing gasket (14) comprising an annular main body (18) made of an elastomer material and comprising an annular radially outer face (20) and an annular radially inner face (22) parallel and coaxial to each other, wherein at least one of said radially outer face (20,30) and said radially inner face (22, 32) comprises at least one first thin layer (23, 33), made of metal or soft metal or PTFE, and having a thickness of between 1 nm and 1 mm.

## Description

### TECHNICAL FIELD

The invention concerns a compression sealing gasket designed to reduce its permeability to gas.

The sealing gasket is intended to be implemented on medium and high voltage gas insulated apparatuses, at the connection between two parts.

### PRIOR ART

Some medium and high voltage apparatuses comprise hollow components in which conductors are arranged.

An insulating gas fills these components, to isolate the conductors carrying current at a high voltage from the hollow components which are at ground potential.

The insulating gas is also able to withstand the dielectric field in short distances between conductors arranged in the component.

The connection between two components comprises for example a tubular part from each component and a sealing gasket placed between the tubular parts.

According to a known embodiment, the sealing gasket is made of an elastomer and is compressed between the two components, for example two tubular parts or one tubular part and a flat plate.

The compression of the tubular parts produces an elastic deformation of the gasket, improving the tightness of the connection.

However, the gasket is generally made of an elastomer that shows a permeability to the insulating gas.

One object of the invention is to provide a sealing gasket having a significantly lower permeability, in order to reduce the leakage rate for a complete apparatus.

The aim is to reach for the overall arrangement a leakage rate less than 0.5% vol/year as describes in the relevant IEC standards for switchgear, for example IEC 62271-203 for gas insulated switchgear.

This improvement is of particular interest since the industry moves towards insulating gasses, consisting of different mixtures and different gasses, that show other impact of leaks due to the different characteristics of those new molecules used compared to the prevailing SF6 gas that has been used for decades.

In particular, a gas comprising heptafluoroisobutyronitrile mixed with a dilution gas comprising carbon dioxide and oxygen is used in replacement of SF₆. CO₂ has a strong propensity to leak. O₂ and N₂ also leak, but less than CO₂. These 3 gases have a stronger propensity to leak than SF₆. These leaks pose problems, in particular because of the adverse effect of CO₂ on the environment; furthermore the lost gas must also be replaced, which involves further costs.

Another object of the invention is to provide a sealing gasket having a significantly lower permeability to heptafluoroisobutyronitrile and/or heptafluoroisopropyl trifluoromethyl ketone (also named 2-butanone, 1,1,1,3,4,4,4-heptafluoro-3-(trifluoromethyl)- (CAS No 756-12-7) and/or to CO₂ and/or O₂ and/or N₂, in particular in gas insulated apparatuses implemented in medium or high voltage applications. Indeed such a gas may contain:
- heptafluoroisobutyronitrile, alone or mixed with with O₂ and/or CO₂ and/or N₂;
- and/or heptafluoroisopropyl trifluoromethyl ketone, alone or mixed with O₂ and/or CO₂ and/or N₂;
- or CO₂, alone or in a mixture with O₂, and/or with N₂;
- N₂, alone or in a mixture with O₂ and/or CO₂.

Furthermore, H₂O is not wanted inside such devices, another object of the invention is to provide a sealing gasket reducing or limiting or avoiding permeation of H₂O from the outside of such a gas insulated apparatus implemented in medium or high voltage applications.

### BRIEF DESCRIPTION OF THE INVENTION

The invention concerns a gasket (or a sealing gasket, or a compression sealing gasket) comprising an annular main body made of an elastomer material and comprising a radially inner face and a radially outer face, wherein at least one of said radially inner face and said radially outer face comprises at least one first thin layer, made of, or comprising, a metal or a soft metal or PTFE.

Thus at least one first thin layer is deposited or formed on at least part of said radially inner face and/or said radially outer face.

Said first thin layer is efficient against leaks of heptafluoroisobutyronitrile and/or heptafluoroisopropyl trifluoromethyl ketone (also named 2-butanone, 1,1,1,3,4,4,4-heptafluoro-3-(trifluoromethyl)- (CAS No 756-12-7)) and/or CO₂ and/O₂ and/or N₂, in particular in applications implementing a gas, for example heptafluoroisobutyronitrile and/or heptafluoroisopropyl trifluoromethyl ketone (also named 2-butanone, 1,1,1,3,4,4,4-heptafluoro-3-(trifluoromethyl)- (CAS No 756-12-7)), possibly mixed with a dilution gas, which for example comprises carbon dioxide and oxygen and/or an oxygenated compounds, for example at a pressure comprised between 1 bar and 20 bars.

It is also is efficient against permeation of H₂O.

Preferably said first thin layer:
- has a thickness of between 1 nm and 1 mm, for example 300 nm or 1 µm;
- and/or at least partially or completely covers at least one of said radially inner face and said radially outer face.

In a particular embodiment, each of the radially outer face and the radially inner face bears a thin layer of the above type.

In more particular embodiment:
- said first thin layer completely covers said radially outer face; and a thin layer, made of metal or PTFE and having for example a thickness of between 1 nm and 1 mm, partly or completely covers said inner face;
- or said first thin layer partly covers said radially outer face; and a thin layer, made of metal or PTFE and having a thickness of between 1 nm and 1 mm, completely or partly covers said inner face.

Said main body may further comprise end faces which connect said radially inner face and said radially outer face, at least one of said end faces comprising a second thin layer of metal or soft metal or PTFE.

Said second thin layer:
- may partly or completely cover at least one of said end faces;
- and/or may have a thickness of between 1 nm and 1 µm.

In a gasket according to the invention:
- if at least one of said first thin layer and/or said second thin layer is made of, or comprises, metal or a soft metal, said metal or soft metal may be selected for example from among Ag, Al₂O₃, tin, Copper, Gold, Iron, or a mixture of these elements and/or any oxide of these elements;
- if at least one of said first thin layer and/or said second thin layer is made of, or comprises, PTFE, said PTFE can be with or without charges (virgin or with filler (s)).

A gasket according to the invention may comprise at least two superposed first thin layers of different materials, each one for example from the above list of metals or PTFE, one or both of them preferably having a thickness between 1 nm and 1 µm, the upper one being for example for protecting the underlying one; in a particular example, the underlying layer is or comprises a metal or a soft metal, for example from the above list, and the overlying layer protects the underlying layer against corrosion.

In an embodiment of a gasket according to the invention, said radially outer face and said radially inner face can be parallel and/or coaxial to each other.

In another embodiment of a gasket according to the invention:
- at least one of said radially outer face and said radially inner face has a wavy or corrugated shape;
- and/or at least one end face has a wavy shape.

The invention also concerns a sealing system comprising two components, in which each of the components comprises an end face that faces the assembling face of the other component and wherein a compression sealing gasket according to the invention is arranged and is compressed between the assembling faces of said components.

Said components may form part of a gas insulated portion of a high or medium voltage apparatus, said portion containing, or being intended to contain, a gas, for example:
- heptafluoroisobutyronitrile and/or heptafluoroisopropyl trifluoromethyl ketone (also named 2-butanone, 1,1,1,3,4,4,4-heptafluoro-3-(trifluoromethyl)- (CAS No 756-12-7)), possibly mixed with a gas or a dilution gas comprising at least CO₂ and/O₂ and/or N₂ and/or an oxygenated compound;
- or comprising at least CO₂ and/O₂ and/or N₂ and/or an oxygenated compound.

Said components may be at least partly cylindrical and can be arranged coaxially to each other and to a main axis A, said end face of each component extending in a plane perpendicular to said main axis A.

Preferably, at least one of the assembling faces comprises an annular recess in which the compression sealing gasket is fitted.

Preferably, the gasket is axially compressed by the assembling faces.

The invention also concerns a method for insulating a gas insulated portion of a high or medium voltage apparatus, said portion containing a gas, for example heptafluoroisobutyronitrile and/or heptafluoroisopropyl trifluoromethyl ketone (also named 2-butanone, 1,1,1,3,4,4,4-heptafluoro-3-(trifluoromethyl)- (CAS No 756-12-7)) possibly mixed with a gas or a dilution gas comprising at least CO₂ and/O₂ and/or N₂ and/or an oxygenated compound, or said portion containing a gas comprising at least CO₂ and/O₂ and/or N₂ and/or an oxygenated compound, said apparatus further comprising two components, in which each of the components comprises an end face that faces the assembling face of the other component and wherein a gasket, or a sealing gasket, or a compression sealing gasket according to the invention is arranged and is compressed between the assembling faces of the components.

Said gas can be contained in said apparatus at a pressure between 1 bar and 20 bars.

### BRIEF DESCRIPTION OF THE FIGURES

Figure 1 is a schematic diagram of a high voltage apparatus comprising two components assembled together using a gasket according to the invention.
Figure 2A and 2B are details of the assembly of the components showing how the gasket is received between the two components.
Figure 3 is a diagram showing a first embodiment of the gasket according to the invention.
Figure 4 shows diagrams representing a second embodiment a gasket according to the invention.
Figures 5A-5B are front views of various embodiments of gaskets according to the invention.
Figure 6 is a schematic diagram of a high voltage apparatus comprising a hole of a gas compartment closed by a flange and comprising a gasket according to the invention.

### DETAILED DESCRIPTION OF PARTICULAR EMBODIMENTS

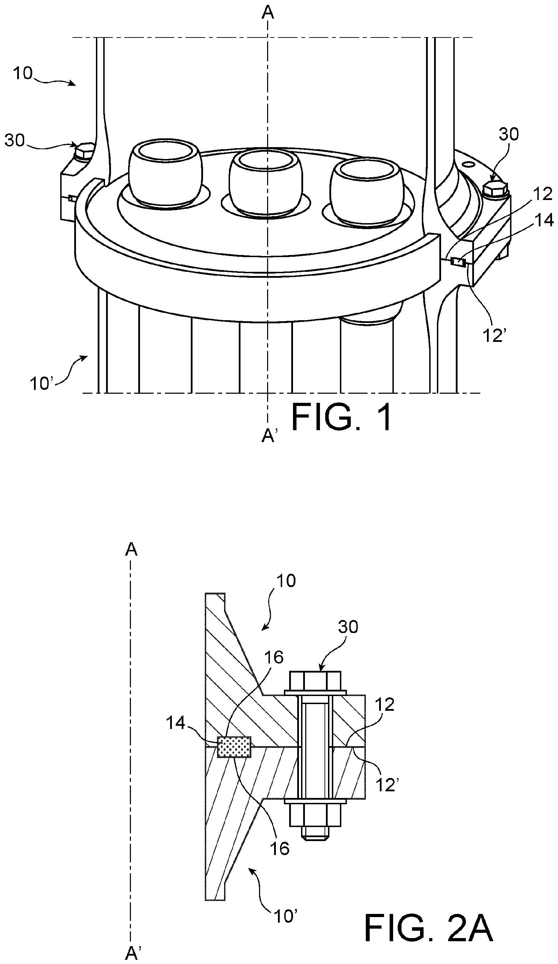

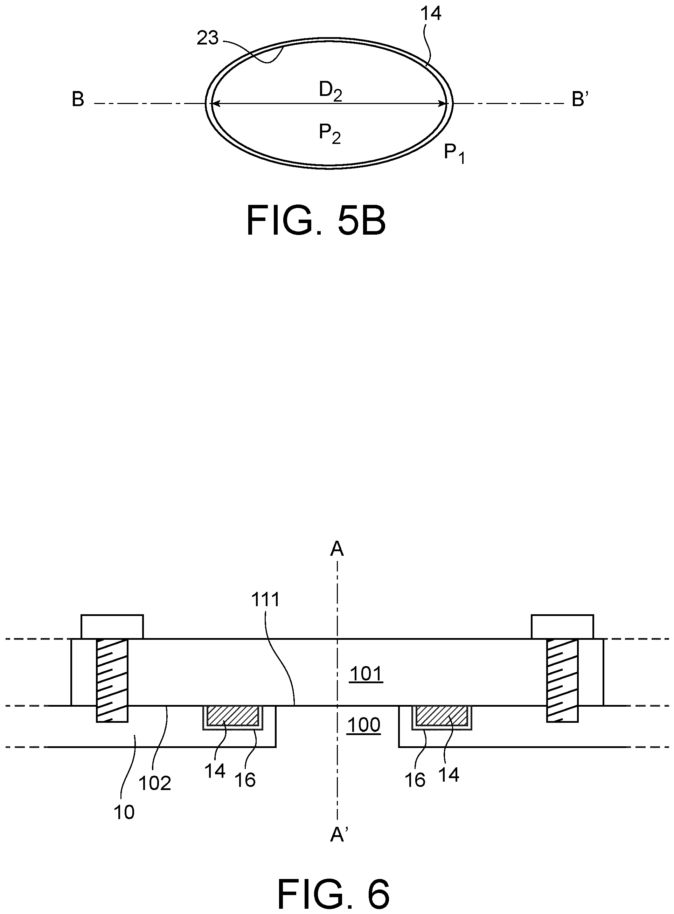

FIG. 1 illustrates a portion of a high voltage apparatus comprising components 10 assembled one to the other. Here, each component 10 is represented as a cylindrical and tubular component. It will be understood that a gasket 14, 14' according to the invention applies to cylindrical components like on figure 1 or, alternatively, to components which may be of any other shape that comprise, for example:
- a non-cylindrical tubular part;
- or a non-tubular part, for example a hole 100 of a gas compartment (figure 6) closed by a flange 101; an end face 111 of the flange faces the assembling face 102 of the gas compartment, which comprises a recess 16 to receive the gasket 14; alternatively, the recess could be formed partly or completely in flange 101.

Alternatively a gasket according to the invention can be used for example at the interface between two flanges.

The following description is made with reference to tubular elements but the invention applies to any other pair of elements, the interface of which must be sealed, in particular to:
- a gas like heptafluoroisobutyronitrile and/or heptafluoroisopropyl trifluoromethyl ketone (also named 2-butanone, 1,1,1,3,4,4,4-heptafluoro-3-(trifluoromethyl)- (CAS No 756-12-7)), possibly mixed with a gas or a dilution gas comprising at least CO₂ and/O₂ and/or N₂ and/or and/or an oxygenated compound;
- or to a gas comprising at least CO₂ and/O₂ and/or N₂ and/or an oxygenated compound.

Said gas can have a pressure between 1 bar and 20 bar, for example 5 bar or 15 bar.

In the following description, the elements represented will be designated as the components 10, 10'.

The components 10, 10' extend coaxial to a main axis AA' of the high voltage apparatus.

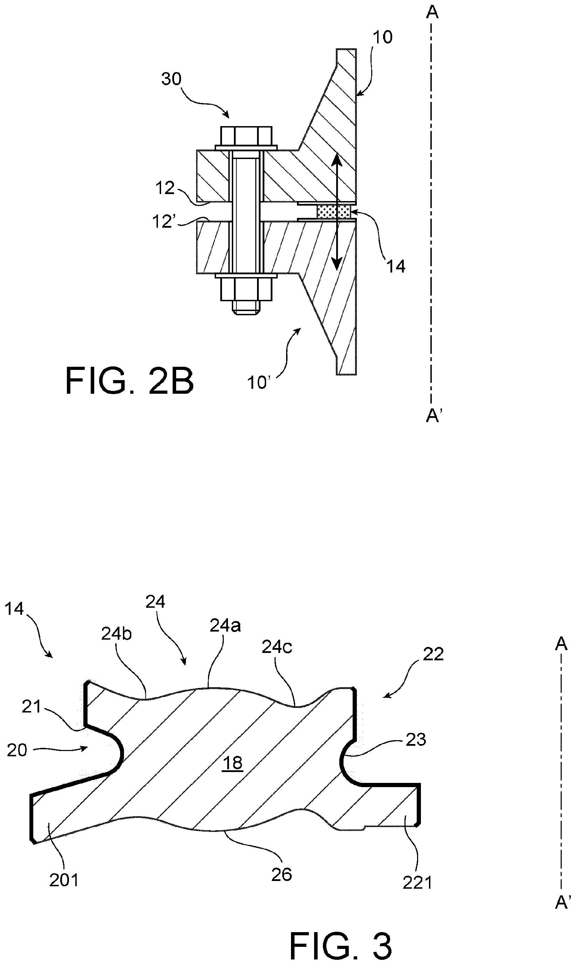

As can be seen in more details in figs 2A and 2B, each component 10 comprises an end face 12 which faces, and is connected, to the end face 12' of the other component 10'.

A sealing system for connecting the components 10, 10' comprises a gasket, or a sealing gasket, or a compression sealing gasket 14, 14', of annular general shape that is arranged axially between the end faces 12, 12' of the two components 10, 10'. This gasket 14, 14' extends substantially in a plane, perpendicular to axis AA'. In this, and in most of the examples below, said gasket has a circular symmetry around axis AA'.

The sealing system comprises tightening means 30, such as bolting means that press axially one component 10 towards the other 10'.

The tightening means 30 also compress axially the sealing gasket 14, 14' to provide a gastight connection between the two components 10, 10'.

According to a first embodiment represented on fig. 2A, the end face 12, 12' of each component 10, 10' comprises an annular recess 16 in which part of the sealing gasket 14, 14' is received.

The axial depth of the recesses 16 is inferior to half of the axial height of the gasket 14, 14' before the two components 10, 10' are assembled. As a consequence, before the definitive assembling of the components 10, 10' the gasket 14, 14' protrudes axially from the end face 12, 12' of each component 10, 10'.

According to another embodiment shown on fig. 2B, the gasket 14, 14' is in contact with the end faces 12, 12' of both components 10, 10' and maintains the end faces 12, 12' distant one from the other.

The compression of the gasket 14, 14' by the tightening means 30 produces an axial deformation of the gasket 14, 14' and maintains an efficient pressure of the gasket 14, 14' on the end faces 12, 12' and against the walls and bottom of the recess 16.

The gasket 14, 14' comprises a body or a main body 18, 38 made of a single material, for example of an elastomer like, as a non-limiting example, the one known as unmodified butyl rubber or modified butyl rubber, for example chlorobutyl rubber (CIIR) or bromobutyl rubber.

The permeability of this elastomer with respect to the gas intended to fill the components 10 results in a loss of gas during time.

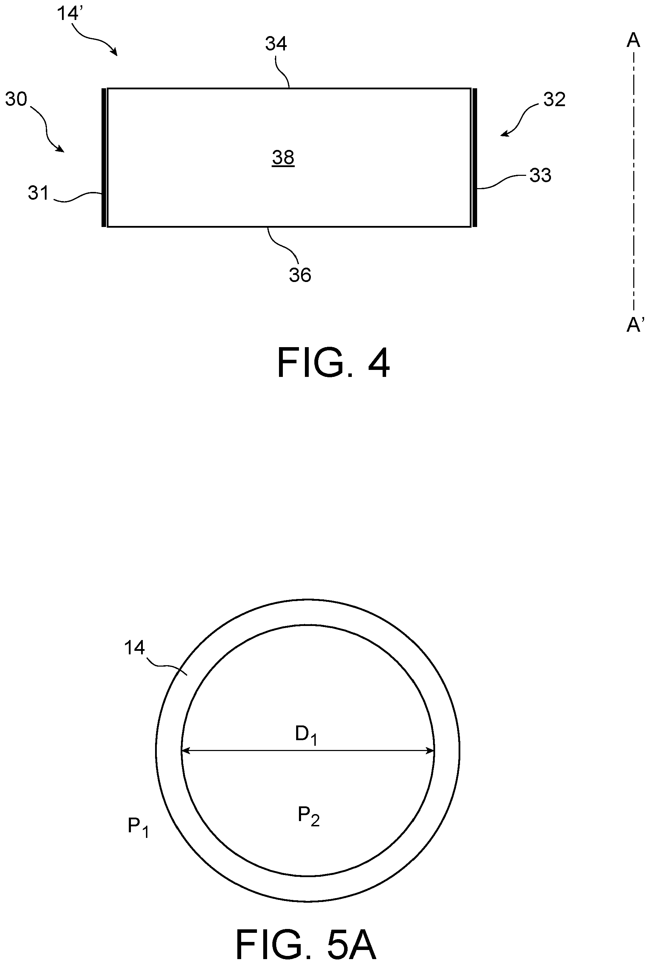

As can be seen on figures 3 and 4, a section of the main body 18, 38 of the gasket 14, along an axial plane containing main axis AA', can be of general rectangular shape. Alternatively, it can have the section, or the circular section, of an "O" ring.

The main body 18, 38 of the gasket 14, 14' then comprises an annular radially outer face 20, 30, an annular radially inner face 22, 32 and two planar annular end faces 24, 26, 34, 36 that axially delimit the gasket 14, 14' and connect the inner face 22, 32 to the outer face 20, 30.

According to a preferred embodiment, the faces 20, 22, 24 (figure 3) of the main body 18 are wave shaped to enhance the sealing. A wave shape comprises at least one protuberance or peak 24a and at least one recess or depression or valley 24b, 24c. The gas pressure has a positive effect thanks to this complex shape: it increases the compression rate, the pressure pushing the gasket towards the grooves.

The faces 20, 22, 24 can have a different shape, or be rectilinear, as illustrated on figure 4. Alternatively, the gasket has the shape of an "O" ring, which also has an inner face and an outer face.

The inside part of the device in which a gasket according to the invention is implemented usually has the highest pressure P2 in service conditions (the outside pressure of the device being P1 < P2).

In order to reduce the permeability of the gasket 14 to a gas, for example at pressure P2, like heptafluoroisobutyronitrile and/or heptafluoroisopropyl trifluoromethyl ketone (also named 2-butanone, 1,1,1,3,4,4,4-heptafluoro-3-(trifluoromethyl)- (CAS No 756-12-7)) and/or CO₂ and/or O₂ and/or N₂, and/or to H₂O, at least one of the inner face 22, 32 and of the outer face 21, 31 comprises a first thin layer 23. Preferably, said thin layer has a thickness of between 1 nm and 1 mm. It therefore requires only a small amount of material. It can be made of, or comprise, a metal or a soft metal, for example deposited by a spraying technique; for example such a technique may involve the spraying of 2 aerosols in aqueous phase, which will form a liquid film in which an oxidation-reduction reaction takes place after being in contact with the workpiece. This chemical reaction creates a uniform and homogeneous metallic layer on the workpiece's surface area.

Said metal or soft metal may for example be selected from among Ag, Al₂O₃, tin, Copper, Gold, Iron, or a mixture of these elements and/or any oxide of these elements.

Alternatively said first thin layer 23 can be made of, or comprise, PTFE, with or without charges.

Both the inner face 22, 32 and the outer face 20, 30 can comprise a thin layer 21, 23, each made of, or comprising, metal or soft metal (for example from the above list) or PTFE. Preferably, at least one, or both, of said thin layer 21, 23 has a thickness of between 1 nm and 1 mm, for example 300 nm or 1 µm.

For example, each of the inner and outer faces has a layer of 300 nm of Ag

At least one of the planar end faces 24, 26, 34, 36 can be covered, partly or completely, by a thin layer, made of, or comprising, a metal or a soft metal, (for example from the above list) or PTFE. Preferably, said thin layer has a thickness of between 1 nm and 1 mm. This reinforces the tightness of the gasket to any of the above mentioned gases.

Figure 5A is a front view in a plane perpendicular to the axis (AA') of a circular or annular gasket according to the invention. It has an inner diameter D₁ which can for example be comprised between 30 mm and 1300 mm.

Alternatively, a gasket according to the invention also extends in a plane perpendicular to the axis (AA') but has an elongated or oval or ellipsoidal shape (figure 5B) along a main axis BB' (perpendicular to axis AA'); it has a maximal inner dimension D₂ which can for example be comprised between 30 mm and 1300 mm.

On both figures 5A and 5B, the radially inner face bears a thin metal layer 23 according to the invention. The axis AA' is perpendicular to each of figures 5A and 5B.

As already mentioned, in an axial plane containing main axis AA', the main body of the gasket can have the shape of an "O" ring.

The invention applies for example to a switch, or to a circuit-breaker, or to a disconnector, or to a transformer, or to a surge arresters, or to a gas-insulated line, ....

## Claims

1. A compression sealing gasket (14, 14') comprising an main body (18, 38) made of an elastomer material and comprising a radially outer face (20, 30) and an radially inner face (22, 32) coaxial to each other,
wherein at least one of said radially outer face (20,30) and said radially inner face (22, 32) comprises at least one first thin layer (23, 33), made of metal or soft metal or PTFE, and having a thickness of between 1 nm and 1 mm.

2. A gasket (14, 14') according to claim 1, wherein the first thin layer at least partially covers at least one of said radially outer face (20, 30) and said radially inner face (22, 32).

3. A gasket (14, 14') according to any of claims 1 or 2, wherein said main body (18, 38) further comprises end faces (24, 26, 34, 36) which connect said inner face and said outer face, at least one of said end faces comprising a second thin layer of metal or soft metal or PTFE.

4. A gasket (14, 14') according to claim 3, wherein:
- said first thin layer completely covers said radially outer face (20, 30), and a thin layer, made of metal or soft metal or PTFE and having a thickness of between 1 nm and 1 mm partly covers said inner face (22, 32);
- or said first thin layer partly covers said radially outer face (20, 30), and a thin layer, made of metal or soft metal or PTFE and having a thickness of between 1 nm and 1 mm, completely covers said inner face (22, 32).

5. A gasket (14, 14') according to claim 3 or 4, wherein said second thin layer has a thickness of between 1 nm and 1 µm.

6. A gasket (14, 14') according to any of claims 1 to 5, wherein said first thin layer and/or said second thin layer is made of a metal or a soft metal, selected from among Ag, Al₂O₃, tin, Copper, Gold, Iron, or a mixture of these elements and/or any oxide of these elements.

7. A gasket (14, 14') according to any of claims 1 to 6, wherein said radially outer face (20, 30) and said radially inner face (22, 32) are parallel and/or coaxial to each other.

8. A gasket (14, 14') according to any of claims 1 to 6, wherein:
- at least one of said radially outer face (20, 30) and said radially inner face (22) has a wavy shape;
- and/or further comprising end faces (24, 26, 34, 36) of which at least one has a wavy shape.

9. A gasket (14, 14') according to any of claims 1 to 8, wherein said first thin layer (23, 33) is made of, or comprises, metal or soft metal, having a thickness of between 1 nm and 1 mm, and is covered by a protecting layer, for example a thin layer made of, or comprising, metal or soft metal or PTFE.

10. A sealing system comprising two components (10, 10'), in which each of the components (10, 10') comprises an end face (12) that faces the assembling face (12) of the other component (10) and
wherein a compression sealing gasket (14, 14') according to any preceding claim is arranged and is compressed between the assembling faces (12, 12') of said components (10, 10').

11. A sealing system according to claim 10, wherein said components (10, 10') are at least partly cylindrical, arranged coaxially to each other and to a main axis (AA'), said end face (12, 12') of each component extending in a plane perpendicular to said main axis (AA').

12. A sealing system according to claim 10 or 11, wherein at least one of the assembling faces (12, 12') comprises an annular recess (16) in which the compression sealing gasket (14, 14') is fitted.

13. A sealing system according to any of claims 10 to 12, wherein the gasket (14, 14') is axially compressed by the assembling faces (12, 12').

14. A method for insulating a gas insulated portion of a high or medium voltage apparatus, said portion containing a gas, for example heptafluoroisobutyronitrile or heptafluoroisopropyl trifluoromethyl ketone (also named 2-butanone, 1,1,1,3,4,4,4-heptafluoro-3-(trifluoromethyl)- (CAS No 756-12-7)), possibly mixed with a dilution gas comprising CO₂ and/or O₂ and/or N₂ and/or an oxygenated compound , or said portion containing a gas comprising at least CO₂ and/or O₂ and/or N₂ and/or an oxygenated compound, said apparatus further comprising two components (10, 10'), in which each of the components (10, 10') comprises an end face (12, 12') that faces the assembling face (12', 12) of the other component (10) and wherein a compression sealing gasket (14, 14') according to any claim of claims 1 to 9 is arranged and is compressed between the assembling faces (12, 12') of the components (10, 10').

15. A method according to claim 14, wherein said gas is contained in said apparatus at a pressure (P2) between 1 bar and 20 bars.
